# EUROPÄISCHE PATENTSCHRIFT

(11) **EP 2 386 463 B1**
(45) Veröffentlichungstag und Bekanntmachung des Hinweises auf die Patenterteilung: **08.05.2019**
(21) Anmeldenummer: 11002567.3
(22) Anmeldetag: 29.03.2011
(51) Int. Cl.: B62D 15/02, G08G 1/16

(54) **Verfahren zum Einparken oder Ausparken eines Fahrzeugs sowie entsprechendes Assistenzsystem und Fahrzeug**
Method for parking a vehicle or leaving a parking space and corresponding assistance system and vehicle
Procédé de stationnement ou de sortie de stationnement d'un véhicule ainsi que système d'assistance et véhicule correspondant

(30) Priorität: 12.05.2010 DE 102010020206
(43) Veröffentlichungstag der Anmeldung: 16.11.2011
(73) Patentinhaber: Volkswagen Aktiengesellschaft, 38440 Wolfsburg (DE)
(72) Erfinder: Wuttke, Ulrich, 38126 Braunschweig (DE); Hüger, Philipp, 38448 Wolfsburg (DE); Terkes, Mehmet, 38102 Braunschweig (DE); Wendler, Torsten, 38100 Braunschweig (DE)

(56) Entgegenhaltungen:
- WO-A1-2005/105551
- WO-A1-2008/071596
- DE-A1-102008 020 561

## Beschreibung

Die vorliegende Erfindung betrifft ein Verfahren, um ein Fahrzeug insbesondere (semi-) automatisch einzuparken oder auszuparken. Darüber hinaus betrifft die vorliegende Erfindung ein entsprechend ausgestaltetes Assistenzsystem und eine entsprechend ausgestaltetes Fahrzeug.

Nach dem Stand der Technik, siehe DE 10 2008 020 561 A1 oder DE 10 004 020 424 A1, ist es bekannt, die verbleibende Wegstrecke zu einem Umkehrpunkt bei einem Einparkvorgang optisch darzustellen.

Allerdings tritt bei den Verfahren nach dem Stand der Technik das Problem auf, dass vor dem optisch dargestellten Erreichen des Umkehrpunktes ein Hinweis (meist ein so genannter Dauerton) den Fahrer darauf hinweist, dass er sich unmittelbar vor einem Zusammenstoß mit einem Hindernis befindet. Mit anderen Worten tritt nach dem Stand der Technik der Fall auf, dass die optische Darstellung dem Fahrer signalisiert weiterzufahren, während ihn ein anderes System vor einem unmittelbar bevorstehenden Zusammenstoß warnt.

Die vorliegende Erfindung stellt sich die Aufgabe, dieses nach dem Stand der Technik bekannte Problem zumindest abzumildern.

Erfindungsgemäß wird diese Aufgabe durch ein Verfahren zum Einparken oder Ausparken eines Fahrzeugs nach Anspruch 1, durch ein Assistenzsystem nach Anspruch 6 und durch ein Fahrzeug nach Anspruch 8 gelöst. Die abhängigen Ansprüche definieren bevorzugte und vorteilhafte Ausführungsformen der vorliegenden Erfindung.

Im Rahmen der vorliegenden Erfindung wird ein Verfahren zum Einparken oder Ausparken eines Fahrzeugs unter Verwendung eines Assistenzsystems bereitgestellt bei dem eine Trajektorie berechnet wird, welche dem Fahrweg des Fahrzeugs beim Ein- oder Ausparken entspricht. Dabei wird automatisch während eines Einparkvorgangs oder eines Ausparkvorgangs des Assistenzsystems ein Abstand des Fahrzeugs entlang der berechneten Trajektorie (8) bis zu einem Punkt (Umkehrpunkt oder Haltepunkt), an welchem das Fahrzeug während des Einparkvorgangs oder des Ausparkvorgangs anzuhalten ist, erfasst und ein Fortschrittshinweis erzeugt, welcher diesen Abstand repräsentiert. Dieser Fortschrittshinweis, welcher dem Fahrer den Abstand signalisiert, wird bei dem Einparkvorgang oder dem Ausparkvorgang mit Informationen aus Messergebnissen automatisch synchronisiert, welche mit Hilfe von einem oder von mehreren Abstandsmesssensoren des Fahrzeugs erfasst werden.

Der Fortschrittshinweis kann dabei ein akustischer Hinweis z.B. in Form einer bestimmten Tonfolge, aus welcher der Fahrer den Abstand bis zu dem Haltepunkt ableiten kann, sein. Es ist auch möglich, dass der Fortschrittshinweis ein haptischer Hinweis (z.B. ein Vibrieren des Lenkrads) ist, aus welchem der Fahrer z.B. über die Frequenz oder die Stärke der Vibrationen den Abstand bis zu dem Haltepunkt ableiten kann. Bevorzugt handelt es sich bei dem Fortschrittshinweis um eine optische Fortschrittsanzeige, welche den Abstand z.B. in Form eines Balkens darstellt.

Der Warnhinweis, welcher den Fahrer des Fahrzeugs darüber informiert, dass ein Zusammenstoß mit einem Hindernis unmittelbar bevorsteht, da der Abstand zwischen dem Fahrzeug und dem Hindernis einen vorgegebenen Schwellenwert unterschritten hat, wird mit Hilfe derselben Abstandsmesssensoren erzeugt, mit welchen auch der Fortschrittshinweis synchronisiert wird. Daher wird vorteilhafterweise der Fall vermieden, dass der Warnhinweis erzeugt wird, während gleichzeitig der Fortschrittshinweis dem Fahrer signalisiert, dass er noch ein Stück weiterzufahren hat, um den erwünschten Umkehrpunkt oder Haltepunkt zu erreichen.

Dabei wird der dem Abstand entsprechende Fortschrittshinweis (d.h. die Reststrecke bis zum Stillstand des Fahrzeugs, welche durch den Fortschrittshinweis signalisiert wird) derart synchronisiert, dass er einer Wegstrecke zu einer Stelle (Dauertongrenze) entspricht, an welcher ein vorbestimmter Warnabstand zwischen dem Fahrzeug und einem Hindernis erreicht wird. Das Assistenzsystem erzeugt den vorab beschriebenen Warnhinweis vor einer unmittelbar bevorstehenden Kollision mit einem Hindernis genau dann, wenn dieser Warnabstand unterschritten wird.

Dadurch wird sichergestellt, dass der Fortschrittshinweis dem Fahrer signalisiert, dass das Fahrzeug den Umkehrpunkt oder Haltepunkt erreicht hat, wenn sich das Fahrzeug exakt in dem Warnabstand zu einem Hindernis befindet. Mit anderen Worten wird der Warnhinweis (z.B. Dauerton) vor der unmittelbar bevorstehenden Kollision gerade noch nicht erzeugt, wenn sich das Fahrzeug an dem durch den Fortschrittshinweis signalisierten Umkehrpunkt oder Haltepunkt befindet.

Wenn der mit dem Fortschrittshinweis signalisierte Abstand einer kleineren Entfernung entspricht als der Entfernung des Fahrzeugs von der Dauertongrenze, wird gemäß einer bevorzugten Ausführungsform der mit dem Fortschrittshinweis signalisierte Abstand nicht verändert (d.h. nicht vergrößert), sondern auf seinem aktuellen Wert gehalten, bis nach einer entsprechenden zurückgelegten Fahrstrecke des Fahrzeugs der mit dem Fortschrittshinweis signalisierte Abstand gemäß den Messergebnissen der Abstandsmesssensoren wieder der Entfernung zu der Dauertongrenze entspricht. Dies gilt insbesondere bei einem Einparken in eine Längsparklücke (d.h. einer Parklücke, deren Längsrichtung im Wesentlichen parallel zu der angrenzenden Fahrbahn liegt) und bei einem Ausparkvorgang (und demnach nicht bei einem Einparken in eine Querparklücke (d.h. einer Parklücke, deren Längsrichtung im Wesentlichen senkrecht zu der angrenzenden Fahrbahn liegt)). Darüber hinaus sollte das Halten des mit dem Fortschrittshinweis signalisierten Abstands nicht vorgenommen werden, wenn die Differenz zwischen dem mit dem Fortschrittshinweis signalisierten Abstand und der tatsächlichen von den Abstandsmessersensoren erfassten Entfernung zu der Dauertongrenze oberhalb eines bestimmten Schwellenwerts liegt. Mit anderen Worten sollte der mit dem Fortschrittshinweis signalisierte Abstand korrigiert (d.h. vergrößert) werden, wenn diese Differenz zu groß ist.

Gemäß einer bevorzugten erfindungsgemäßen Ausführungsform wird die Synchronisation des mit dem Fortschrittshinweis signalisierten Abstands nur durchgeführt, wenn die von den Abstandsmesssensoren erfasste Entfernung zwischen dem Fahrzeug und dem Hindernis unterhalb eines vorbestimmten Schwellenwerts (z.B. 1 m) liegt.

Da durch die vorliegende Erfindung vermieden werden soll, dass die Dauertongrenze von dem Fahrzeug erreicht wird, bevor der Fortschrittshinweis signalisiert, dass das Fahrzeug den Umkehrpunkt oder Haltepunkt erreicht hat, ist es ausreichend, wenn die Synchronisation erst ab einer bestimmten Entfernung des Fahrzeugs von der Dauertongrenze vorgenommen wird. Das heißt, es ist ausreichend, wenn der vorbestimmte Schwellenwert einem größeren Abstand von einem Hindernis entspricht als die Dauertongrenze, so dass die Synchronisation ausreichend früh vor dem Erreichen der Dauertongrenze einsetzt.

Gemäß einer weiteren erfindungsgemäßen Ausführungsform wird eine Auflösung der optischen Fortschrittsanzeige zu Beginn eines Rangierzugs des Einparkvorgangs oder des Ausparkvorgangs festgelegt und dann bis zum Ende dieses Rangierzugs nicht verändert.

Die konstante Auflösung der optischen Fortschrittsanzeige während eines Rangierzugs weist den Vorteil auf, dass der Fahrer dadurch leichter ein Gefühl für den mittels der Fortschrittsanzeige dargestellten Abstand bekommt, als wenn sich die Auflösung der Fortschrittsanzeige während eines Rangierzugs ändern würde.

Im Rahmen der vorliegenden Erfindung wird auch ein Assistenzsystem für ein Fahrzeug bereitgestellt. Dabei umfasst das Assistenzsystem eine Vorrichtung zur Erzeugung eines Fortschrittshinweises, eine Steuerung und einen oder mehrere Abstandsmesssensoren. Das Assistenzsystem erfasst während eines Einparkvorgangs oder eines Ausparkvorgangs des Assistenzsystems einen Abstand des Fahrzeugs bis zu einer Stelle, an welcher das Fahrzeug während des Einparkvorgangs oder des Ausparkvorgangs anzuhalten ist. Mit Hilfe der Vorrichtung wird dann der Fortschrittshinweis derart erzeugt, dass er dem Fahrer diesen Abstand repräsentiert. Darüber hinaus synchronisiert das Assistenzsystem während des Einparkvorgangs oder des Ausparkvorgangs den mit der Fortschrittsanzeige signalisierten Abstand mit Hilfe der Steuerung in Abhängigkeit von Messergebnissen des oder der Abstandsmesssensoren. Als Abstandsmesssensor kann dabei neben einem Ultraschallsensor ein optischer Sensor, ein Infrarot-Sensor, ein Radar, oder auch eine Kamera eingesetzt werden. Auch eine Kombination von Sensoren verschiedener Typen ist denkbar.

Als Vorrichtung zur Erzeugung des Fortschrittshinweises ist ein Lautsprecher zur Erzeugung eines akustischen Hinweises, ein Lenkrad zur Erzeugung eines haptischen Hinweises oder eine Anzeige zur Darstellung einer optischen Fortschrittsanzeige denkbar.

Die Vorteile des erfindungsgemäßen Assistenzsystems entsprechen im Wesentlichen den Vorteilen des erfindungsgemäßen Verfahrens, welche vorab im Detail ausgeführt sind, so dass hier auf eine Wiederholung verzichtet wird.

Schließlich offenbart die vorliegende Erfindung ein Fahrzeug, welches ein erfindungsgemäßes Assistenzsystem umfasst.

Die vorliegende Erfindung ist insbesondere für Kraftfahrzeuge geeignet, welche mit einem Assistenzsystem zum (semi-) automatischen Einparken oder Ausparken ausgestattet sind. Selbstverständlich ist die vorliegende Erfindung nicht auf diesen bevorzugten Anwendungsbereich eingeschränkt, da die vorliegende Erfindung beispielsweise auch bei Schiffen oder Flugzeugen eingesetzt werden kann.

Im Folgenden wird die vorliegende Erfindung anhand bevorzugter erfindungsgemäßer Ausführungsformen mit Bezug zu den Figuren im Detail beschrieben.
- In Fig. 1: ist eine Ausführungsform einer erfindungsgemäßen Fortschrittsanzeige dargestellt.
- In Fig. 2: ist schematisch ein Einparkvorgang gemäß der vorliegenden Erfindung dargestellt.
- In Fig. 3: ist schematisch ein erfindungsgemäßes Fahrzeug mit einem erfindungsgemäßen Assistenzsystem dargestellt.

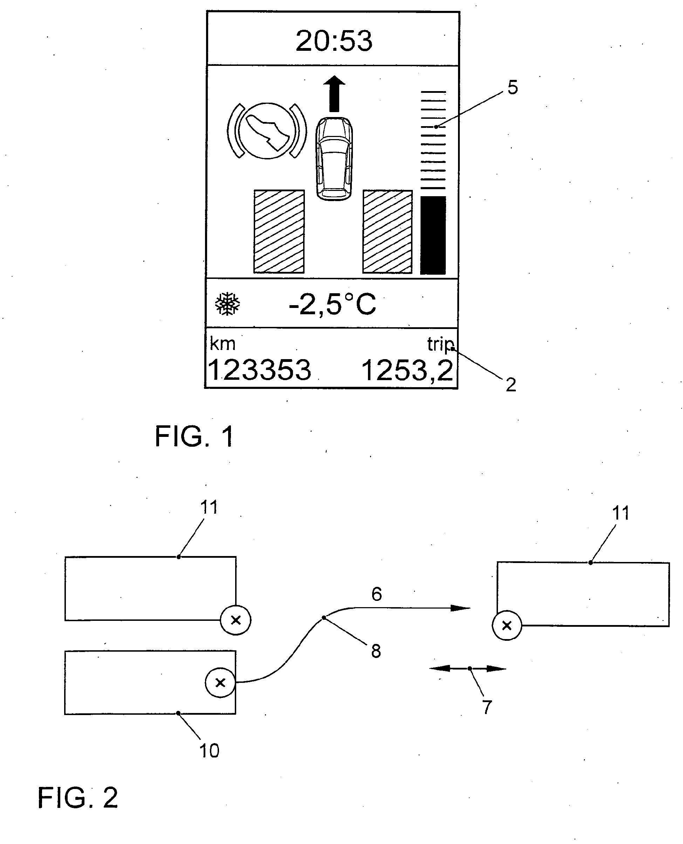

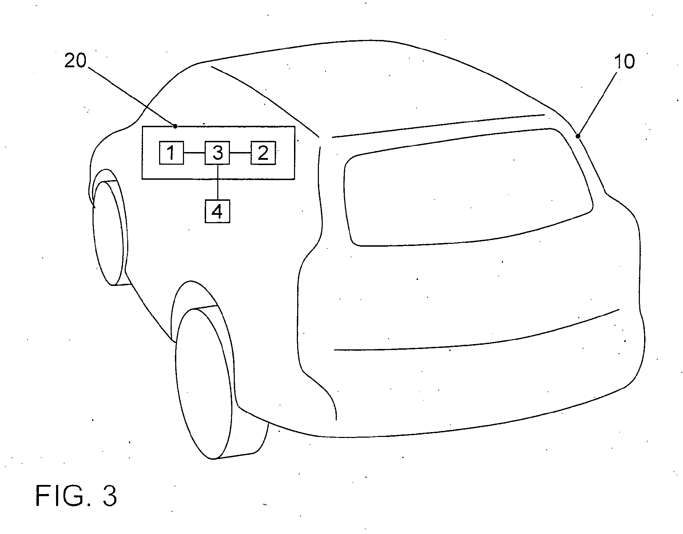

In Fig. 1 ist auf einer Anzeige eines Bordcomputers 2 eines Fahrzeugs 10 (siehe Fig. 3) eine Fortschrittsanzeige 5 dargestellt, welche auch als Bargraph 5 oder Schwellpfeil 5 bezeichnet wird.

Die Fortschrittsanzeige 5 stellt während eines Einparkvorgangs oder Ausparkvorgangs die errechnete Entfernung des Fahrzeugs 10 zu einem vorher errechneten Haltepunkt des Parkvorgangs (d.h. Einparkvorgang oder Ausparkvorgangs) dar. Unter einem Haltepunkt wird während des Parkvorgangs eine Stelle verstanden, an welcher ein Rangierzug des Parkvorgangs beendet ist. Damit kann es sich bei einem Haltepunkt zum einen um einen Umkehrpunkt, aber auch um den Endpunkt des Parkvorgangs handeln. Unter einem Umkehrpunkt wird eine Stelle während des Parkvorgangs verstanden, an welcher ein Rangierzug des Parkvorgangs beendet und ein folgender Rangierzug beginnt. Das heißt, an einem Umkehrpunkt ist der Parkvorgang noch nicht beendet und es findet ein Gangwechsel an diesem Umkehrpunkt statt.

In aller Regel wird der Haltepunkt vor Beginn des entsprechenden Rangierzugs des Parkvorgangs bestimmt und entspricht insbesondere beim Einparkvorgang meist der Dauertongrenze. Das heißt, der Haltepunkt wird vor Beginn des Rangierzugs derart bestimmt, dass der Dauerton, welcher dem Fahrer anzeigt, dass eine Kollision seines Fahrzeugs unmittelbar bevorsteht, gerade noch nicht erzeugt wird. Der von der Fortschrittsanzeige 5 angezeigte Abstand kann aufgrund von Toleranzen oder Ungenauigkeiten bei der Bestimmung des Haltepunkts allerdings von der tatsächlichen Entfernung zur Dauertongrenze abweichen. Um den vorher berechneten Abstand mit dem tatsächlichen Abstand zu synchronisieren, wird der von der Fortschrittsanzeige 5 angezeigte Abstand an den tatsächlichen Abstand, welcher mit Hilfe von Abstandsmesssensoren 1 (siehe Fig. 3) des Fahrzeugs 10 bestimmt wird, angepasst. Dabei wird das Ziel verfolgt, dass der Bargraph 5 gleichzeitig mit dem Erreichen der Dauertongrenze "leer läuft" (d.h. der ausgefüllte Bereich des Bargraph 5 in Fig. 1 ist nicht mehr vorhanden).

Zur Synchronisation des auf der Fortschrittsanzeige dargestellten Abstands werden nur die an der Vorderseite und Rückseite des Fahrzeugs 10 angebrachten Abstandsmesssensoren bzw. Ultraschallsensoren 1 berücksichtigt, d.h. die Messergebnisse der seitlichen Abstandsmesssensoren werden ignoriert.

Die Synchronisation findet gemäß einer bevorzugten Ausführungsform erst dann statt, wenn einer der Abstandsmesssensoren 1 in Fahrtrichtung (d.h. die hinteren Sensoren bei eingelegtem Rückwärtsgang oder die vorderen Sensoren bei eingelegtem Vorwärtsgang) einen Abstand zu einem Hindernis erfasst, welcher kleiner als ein parametrisierbarer Schwellenwert (z.B. 1 m) ist. Sofern der Abstand zu dem Hindernis unterhalb dieses Schwellenwerts liegt, findet die Synchronisation kontinuierlich statt, d.h. der eingangs ermittelte Abstandswert zum Hindernis wird dann kontinuierlich mit aktuellen Informationen aus Messwerten zum Hindernis verglichen und bei einem Unterschied mit den aktuellen Informationen korrigiert.

Die Auflösung der Fortschrittsanzeige 5 wird vor Beginn eines Rangierzugs ermittelt und ändert sich für diesen Rangierzug nicht mehr.

Die Fortschrittsanzeige 5 wird zur Darstellung des Abstands bis zum Haltepunkt angezeigt, wenn beim Einparken in eine Längsparklücke eine Mindestfahrtstrecke von dem Fahrzeug zurückgelegt ist oder wenn beim Einparken in eine Querparklücke die Position der Mitte der Hinterachse des Fahrzeugs die Vorderkante der Parklücke (x-Achse) überschritten hat oder wenn beim Ausparken der Lenkeingriff aktiviert ist.

Zur Darstellung des Abstands auf der Fortschrittsanzeige 5 wird mit Segmenten gearbeitet. Das heißt, der auf der Fortschrittsanzeige 5 dargestellte Abstand verringert sich beispielsweise beim Einparken des Fahrzeugs nicht kontinuierlich, sondern sprunghaft, indem jeweils ein Segment weniger angezeigt wird, wenn sich der Abstand zum Haltepunkt entsprechend verringert hat.

Wenn bei der Synchronisierung erkannt wird, dass die Entfernung zur Dauertongrenze eines von den Abstandsmesssensoren erfassten Hindernisses größer als der auf der Fortschrittsanzeige 5 dargestellte Abstand ist, wird die Anzahl der Segmente der Fortschrittsanzeige 5 entsprechend der für diesen Rangierzug gültigen Auflösung erhöht. Diese Erhöhung wird allerdings nur dann durchgeführt, wenn die Anzahl der hinzuzufügenden Segmente größer als eine parametrisierbare Anzahl ist. Ist die Anzahl der hinzuzufügenden Segmente kleiner als diese parametrisierbare Anzahl (z.B. 1 bis 6 oder ganzzahlig), wird die Anzahl der aktuell dargestellten Segmente solange konstant gehalten, bis die von den Abstandsmesssensoren erfasste Entfernung zur Dauertongrenze des erfassten Hindernisses der Anzahl der angezeigten Segmente entspricht.

Wenn bei der Synchronisierung erkannt wird, dass die Entfernung zur Dauertongrenze eines von den Abstandsmesssensoren erfassten Hindernisses kleiner als der auf der Fortschrittsanzeige 5 dargestellte Abstand ist, wird die Anzahl der auf der Fortschrittsanzeige 5 angezeigten Segmente entsprechend der für diesen Rangierzug gültigen Auflösung reduziert. Damit wird die Bedingung erfüllt, dass keine Segmente mehr auf der Fortschrittsanzeige 5 angezeigt werden, wenn die Dauertongrenze erreicht ist.

In Fig. 2 ist ein erfindungsgemäßer Einparkvorgang dargestellt.

Bei einem Vorbeifahren des Fahrzeugs 10 wird mittels Ultraschallsensoren 1 die Parklücke 6 vermessen und erkannt, dass diese Parklücke 6 ausreichend groß zum Einparken des Fahrzeugs 10 ist. Daraufhin wird eine Trajektorie 8 berechnet, welche dem Fahrweg des Fahrzeugs 10 beim Einparken in die Parklücke 6 entspricht. Nach dem Einlegen des Rückwärtsgangs und nach dem Fahren einer Mindestfahrtstrecke wird die Fortschrittsanzeige 5 auf dem Bordcomputer 2 dargestellt. Im dargestellten Fall zeigt die Fortschrittsanzeige 5 an, welche Fahrstrecke auf der Trajektorie 8 noch zurückzulegen ist, bis das Fahrzeug 10 den Einparkvorgang, welcher in diesem Fall nur aus einem Rangierzug besteht, vollendet hat.

Bei einem Abstand des Fahrzeugs 10 von dem rechten parkenden Fahrzeug 11 (siehe Fig. 2), welcher unterhalb einer Abstandsschwelle 7 (z.B. 1 m) liegt, erfolgt die Synchronisation des mittels der Fortschrittsanzeige 5 angezeigten Abstands mit Hilfe der hinteren Ultraschallsensoren 1 des Fahrzeugs 10. Durch diese Synchronisation ist gewährleistet, dass die mittels der Fortschrittsanzeige 5 angezeigte Fahrstrecke bis zum Ende des Rangierzugs bzw. Einparkvorgangs einen Wert anzeigt, welche auch einem Abstand bis zu der Dauertongrenze entspricht. Mit anderen Worten zeigt die Fortschrittsanzeige durch die Synchronisation kurz vor dem Erreichen der Dauertongrenze auch den Wert 0 (d.h. kein Segment wird mehr dargestellt) an und signalisiert dem Fahrer damit, dass der erste Rangierzug und im vorliegenden Fall der Einparkvorgang erfolgreich beendet ist.

In Fig. 3 ist schematisch ein erfindungsgemäßes Fahrzeug 10 dargestellt, welches eine Lenkung 4 und ein erfindungsgemäßes Assistenzsystem 20 umfasst. Das erfindungsgemäße Assistenzsystem umfasst seinerseits eine Steuerung 3, einen Bordcomputer 2 und einen oder mehrere Ultraschallsensoren 1. Dabei steht die Steuerung 3 mit dem Bordcomputer 2 und den Ultraschallsensoren 1 in Verbindung. Bei einem Einparkvorgang oder bei einem Ausparkvorgang des Fahrzeugs 10 greift die Steuerung 3 in die Lenkung 4 des Fahrzeugs 10 ein; um den Einparkvorgang bzw. Ausparkvorgang (semi-) automatisch durchzuführen.

## Patentansprüche

1. Verfahren zum Einparken oder Ausparken eines Fahrzeugs (10) unter Verwendung eines Assistenzsystems (20), wobei eine Trajektorie (8) berechnet wird, welche dem Fahrweg des Fahrzeugs beim Ein- oder Ausparken entspricht, wobei automatisch ein Abstand des Fahrzeugs (10) entlang der berechneten Trajektorie (8) bis zu einem Punkt, an welchem das Fahrzeug (10) während eines Einparkvorgangs oder eines Ausparkvorgangs des Assistenzsystems (20) anzuhalten ist, erfasst und ein Fortschrittshinweis (5) erzeugt wird, welcher diesem Abstand entspricht, und
wobei der Fortschrittshinweis (5) während des Einparkvorgangs oder des Ausparkvorgangs mit Informationen aus Messergebnissen von mindestens einem Abstandsmesssensor (1) des Fahrzeugs (10) automatisch synchronisiert wird,
wobei der dem Abstand entsprechende Fortschrittshinweis derart synchronisiert wird, dass er einer Wegstrecke zu einer Stelle entspricht, an welcher ein vorbestimmter Warnabstand zwischen dem Fahrzeug und einem Hindernis erreicht wird,
wobei ein Warnhinweis, beispielsweise ein Dauerton, vor einer unmittelbar bevorstehenden Kollision mit dem Hindernis genau dann erzeugt wird, wenn der Warnabstand unterschritten ist, und
wobei der Warnhinweis vor einer unmittelbar bevorstehenden Kollision noch nicht erzeugt wird, wenn sich das Fahrzeug an dem Punkt befindet.

2. Verfahren nach Anspruch 1, **dadurch gekennzeichnet, dass** die Synchronisation des Fortschrittshinweises (5) nur durchgeführt wird, wenn der mindestens eine Abstandsmesssensor (1) eine Entfernung zu einem Hindernis erfasst, welche unterhalb eines vorbestimmten Schwellenwerts (7) liegt.

3. Verfahren nach einem der vorhergehenden Ansprüche, **dadurch gekennzeichnet, dass** der Fortschrittshinweis ein akustischer Hinweis, ein haptischer Hinweis oder eine optische Fortschrittsanzeige (5) ist.

4. Verfahren nach Anspruch 3,
**dadurch gekennzeichnet,**
**dass** eine Auflösung der optischen Fortschrittsanzeige (5) zu einem Beginn des Einparkvorgangs oder des Ausparkvorgangs oder nach einem Gangwechsel des Fahrzeugs (10) automatisch festgelegt wird, und
**dass** die Auflösung bis zu einem Ende des Einparkvorgangs oder des Ausparkvorgangs oder bis zu einem weiteren Gangwechsel des Fahrzeugs (10) nicht verändert wird.

5. Verfahren nach einem der vorhergehenden Ansprüche, **dadurch gekennzeichnet, dass** das Verfahren automatisch von dem Assistenzsystem (20) während des Einparkvorgangs oder des Ausparkvorgangs durchgeführt wird.

6. Assistenzsystem für ein Fahrzeug (10),
wobei das Assistenzsystem (20) eine Vorrichtung (2) zur Erzeugung eines Fortschrittshinweises (5), eine Steuerung (3) und mindestens einen Abstandsmesssensor (1) umfasst,
wobei das Assistenzsystem (20) derart ausgestaltet ist, dass das Assistenzsystem (20) eine Trajektorie (8) berechnet, welche dem Fahrweg des Fahrzeugs beim Ein- oder Ausparken entspricht, und das Assistenzsystem (20) einen Abstand des Fahrzeugs (10) entlang der berechneten Trajektorie (8) bis zu einem Punkt, an welchem das Fahrzeug (10) während eines Einparkvorgangs oder eines Ausparkvorgangs des Assistenzsystems (20) anzuhalten ist, erfasst und mittels der Vorrichtung (2) den Fortschrittshinweis (5) entsprechend dem Abstand erzeugt, und dass das Assistenzsystem (20) während des Einparkvorgangs oder des Ausparkvorgangs den Fortschrittshinweis (5) mittels der Steuerung (3) abhängig von Messergebnissen des mindestens einen Abstandsmesssensors (1) synchronisiert,
wobei das Assistenzsystem (20) ausgestaltet ist,
um den dem Abstand entsprechenden Fortschrittshinweis derart zu synchronisieren, dass er einer Wegstrecke zu einer Stelle entspricht, an welcher ein vorbestimmter Warnabstand zwischen dem Fahrzeug und einem Hindernis erreicht wird,
um einen Warnhinweis, beispielsweise einen Dauerton, vor einer unmittelbar bevorstehenden Kollision mit dem Hindernis genau dann zu erzeugen, wenn der Warnabstand unterschritten ist, und um den Warnhinweis vor einer unmittelbar bevorstehenden Kollision noch nicht zu erzeugen, wenn sich das Fahrzeug an dem Punkt befindet.

7. Assistenzsystem nach Anspruch 6, **dadurch gekennzeichnet, dass** das Assistenzsystem (20) zur Durchführung des Verfahrens nach einem der Ansprüche 1-5 ausgestaltet ist.

8. Fahrzeug mit einem Assistenzsystem (20) nach Anspruch 6 oder 7.

## Claims

1. Method for parking a vehicle (10) or moving a vehicle (10) out of a parking space using an assistance system (20),
wherein a trajectory (8) is calculated which corresponds to the travel path of the vehicle during the parking or moving out of the parking space, wherein a distance of the vehicle (10) along the calculated trajectory (8) up to a point at which the vehicle (10) is to be stopped during a parking process or a process of moving out of a parking space by the assistance system (20) is to be stopped is sensed automatically, and a progress message (5) is generated which corresponds to this distance, and wherein the progress message (5) is automatically synchronized during the parking process or the process of moving out of the parking space with information from measurement results of at least one distance-measuring sensor (1) of the vehicle (10),
wherein the progress message corresponding to the distance is synchronized in such a way that it corresponds to a travel distance to a location at which a predetermined warning distance between the vehicle and an obstacle is reached, wherein a warning message, for example a continuous tone, is generated before a directly imminent collision with the obstacle precisely when the warning distance is undershot, and
wherein the warning message is not yet generated before a directly imminent collision if the vehicle is located at the point.

2. Method according to Claim 1, **characterized in that** the synchronization of the progress message (5) is carried out only if the at least one distance-measuring sensor (1) senses a distance from an obstacle which is below a predetermined threshold value (7).

3. Method according to one of the preceding claims, **characterized in that** the progress message is an acoustic message, a haptic message or an optical progress display (5).

4. Method according to Claim 3,
**characterized**
**in that** a resolution of the optical progress display (5) is automatically defined at a start of the parking process or of the process of moving out of the parking space or after a change of gear speed of the vehicle (10), and
**in that** the resolution is not changed up to an end of the parking process or of the process of moving out of a parking space or up to a further change of gear speed of the vehicle (10).

5. Method according to one of the preceding claims, **characterized in that** the method is carried out automatically by the assistance system (20) during the parking process or process of moving out of the parking space.

6. Assistance system for a vehicle (10),
wherein the assistance system (20) comprises a device (2) for generating a progress message (5), a controller (3) and at least one distance-measuring sensor (1), wherein the assistance system (20) is switched off in such a way that the assistance system (20) calculates a trajectory (8) which corresponds to the travel path of the vehicle during the parking or movement out of a parking space, and the assistance system (20) senses a distance of the vehicle (10) along the calculated trajectory (8) up to a point at which the vehicle (10) is to be stopped during a parking process or process of moving out of the parking space by the assistance system (20), and generates the progress message (5) in accordance with the distance by means of the device (2), and in that during the parking process or the process of moving out of the parking space the assistance system (20) synchronizes the progress message (5) by means of the controller (3) as a function of measurement results of the at least one distance-measuring sensor (1),
wherein the assistance system (20) is configured to synchronize the progress message corresponding to the distance in such a way that said distance corresponds to a travel distance to a location at which a predetermined warning distance between the vehicle and the obstacle is reached, in order to generate a warning message, for example a continuous tone, before a directly imminent collision with the obstacle, precisely when the warning distance is undershot, and in order not yet to generate the warning message before a directly imminent collision if the vehicle is located at the point.

7. Assistance system according to Claim 6, **characterized in that** the assistance system (20) is configured to carry out the method according to one of Claims 1-5.

8. Vehicle having an assistance system (20) according to Claim 6 or 7.

## Revendications

1. Procédé d'entrée en stationnement ou de sortie de stationnement d'un véhicule (10) en utilisant un système d'assistance (20), une trajectoire (8) étant calculée, laquelle correspond au chemin du véhicule lors de l'entrée en stationnement ou de la sortie de stationnement, un écart du véhicule (10) le long de la trajectoire (8) calculée jusqu'à un point au niveau duquel le véhicule (10) doit s'arrêter pendant une manoeuvre d'entrée en stationnement ou une manoeuvre de sortie de stationnement du système d'assistance (20) étant détecté et une notification de progression (5) étant générée, laquelle correspondant à cet écart, et la notification de progression (5) étant synchronisée automatiquement pendant la manoeuvre d'entrée en stationnement ou la manoeuvre de sortie de stationnement avec des informations issues de résultats de mesure d'au moins un capteur de mesure d'écart (1) du véhicule (10),
la notification de progression correspondant à l'écart étant synchronisée de telle sorte qu'elle correspond à un parcours jusqu'à un endroit auquel un écart d'alerte prédéfini entre le véhicule et un obstacle est atteint, une notification d'alerte, par exemple un son continu, avant une collision imminente directe avec l'obstacle étant générée exactement au moment où l'écart devient inférieur à l'écart d'alerte, et la notification d'alerte avant une collision imminente directe n'étant pas encore générée lorsque le véhicule se trouve au niveau du point.

2. Procédé selon la revendication 1, **caractérisé en ce que** la synchronisation de la notification de progression (5) n'est effectuée que lorsque l'au moins un capteur de mesure d'écart (1) détecte une distance par rapport à un obstacle qui est inférieure à une valeur de seuil (7) prédéfinie.

3. Procédé selon l'une des revendications précédentes, **caractérisé en ce que** la notification de progression est une notification sonore, une notification haptique ou une notification de progression (5) visuelle.

4. Procédé selon la revendication 3, **caractérisé en ce qu'**une résolution de la notification de progression (5) visuelle jusqu'à un début de la manoeuvre d'entrée en stationnement ou de la manoeuvre de sortie de stationnement ou après un changement de rapport du véhicule (10) est fixée automatiquement, et **en ce que** la résolution n'est pas modifiée jusqu'à une fin de la manoeuvre d'entrée en stationnement ou de la manoeuvre de sortie de stationnement ou jusqu'à un autre changement de rapport du véhicule (10).

5. Procédé selon l'une des revendications précédentes, **caractérisé en ce que** le procédé est mis en oeuvre automatiquement par le système d'assistance (20) pendant la manoeuvre d'entrée en stationnement ou la manoeuvre de sortie de stationnement.

6. Système d'assistance pour un véhicule (10),
le système d'assistance (20) comportant un dispositif (2) destiné à générer une notification de progression (5), une commande (3) et au moins un capteur de mesure d'écart (1),
le système d'assistance (20) étant configuré de telle sorte que le système d'assistance (20) calcule une trajectoire (8), laquelle correspond au chemin du véhicule lors de l'entrée ou de la sortie de stationnement, et le système d'assistance (20) détectant un écart du véhicule (10) le long de la trajectoire (8) calculée jusqu'à un point au niveau duquel le véhicule (10) doit s'arrêter pendant une manoeuvre d'entrée en stationnement ou une manoeuvre de sortie de stationnement du système d'assistance (20), et génère la notification de progression (5) correspondant à cet écart au moyen du dispositif (2), et en ce que le système d'assistance (20) synchronisant la notification de progression (5) au moyen de la commande (3) pendant la manoeuvre d'entrée en stationnement ou la manoeuvre de sortie de stationnement en fonction de résultats de mesure de l'au moins un capteur de mesure d'écart (1),
le système d'assistance (20) étant configuré pour synchroniser la notification de progression correspondant à l'écart de telle sorte qu'elle correspond à un parcours jusqu'à un endroit auquel un écart d'alerte prédéfini entre le véhicule et un obstacle est atteint, afin de générer une notification d'alerte, par exemple un son continu, avant une collision imminente directe avec l'obstacle exactement au moment où l'écart devient inférieur à l'écart d'alerte, et afin de ne pas encore générer la notification d'alerte avant une collision imminente directe lorsque le véhicule se trouve au niveau du point.

7. Système d'assistance selon la revendication 6, **caractérisé en ce que** le système d'assistance (20) est configuré pour mettre en oeuvre le procédé selon l'une des revendications 1 à 5.

8. Véhicule équipé d'un système d'assistance (20) selon la revendication 6 ou 7.
